# EUROPEAN PATENT SPECIFICATION

(11) **EP 2 634 215 B1**
(45) Date of publication and mention of the grant of the patent: **22.03.2017**
(21) Application number: 11836185.6
(22) Date of filing: 24.10.2011
(51) Int. Cl.: C08L 53/00, C08K 5/37, C08L 77/02, C08L 29/06, C08L 77/00, C08L 77/06, C08L 29/04, B60C 5/14, B60C 1/00

(54) **ISOBUTYLENE-BASED BLOCK COPOLYMER COMPOSITION**
BLOCKCOPOLYMERZUSAMMENTSETZUNG AUF ISOBUTYLENBASIS
COMPOSITION DE COPOLYMÈRE SÉQUENCÉ À BASE D'ISOBUTYLÈNE

(30) Priority: 29.10.2010 JP 2010243642
(43) Date of publication of application: 04.09.2013
(73) Proprietor: KANEKA CORPORATION, Osaka-shi, Osaka 530-8288 (JP)
(72) Inventor: NAKABAYASHI, Hironari, Settsu-shi Osaka 566-0072 (JP); IKARI, Yoshihiro, Settsu-shi Osaka 566-0072 (JP)
(74) Representative: Hart-Davis, Jason
(86) International application number: PCT/JP2011/074383
(87) International publication number: WO 2012/057051

(56) References cited:
- WO-A1-2009/119232
- JP-A- H08 502 764
- JP-A- 2005 187 509
- JP-A- 2008 516 825
- JP-A- 2010 100 083
- JP-A- 2010 195 969
- JP-A- 2010 514 908

## Description

### Technical Field

The present invention relates to an isobutylene-based block copolymer and a composition superior in air barrier property, flexibility, toughness and adhesion to rubber. Furthermore, the present invention relates to a tire inner liner superior in adhesiveness to carcass.

### Background Art

Conventionally, a block copolymer of isobutylene and styrene is known as a copolymer superior in air barrier property, flexibility and toughness (e.g., patent document 1). However, the balance between mechanical strength and adhesiveness thereof is not sufficient, and the use thereof is limited.

Conventionally, moreover, butyl rubber has been used as a gas permeability resistant material in various fields. For example, it is used as a material for a plug for drug and a tire inner liner. However, butyl rubber has a problem of inferior operability when used as a material for a tire inner liner, since it requires a vulcanization operation.

Patent document 2 discloses a rubber composition for a tire inner liner, which contains a carbon black and a block copolymer of an aromatic vinyl compound and isobutylene. It does not require a vulcanization step and is superior in gas barrier property but still insufficient in adhesion to a rubber constituting a carcass layer.

Patent document 3 discloses an isobutylene-based block copolymer containing an alkenyl group. While the copolymer has an unsaturated bond, it is problematic in the adhesiveness to vulcanized rubbers.

Patent documents 4 and 5 disclose a copolymer of isobutylene and β-pinene. While it shows improved adhesion to a rubber constituting a carcass layer, it is not sufficient and has been a problem of strength at high temperature.

### Prior art document

### Patent documents

patent document 1: JP-A-08-301955
patent document 2: JP-A-06-107896
patent document 3: JP-A-11-222510
patent document 4: JP-A-2010-195864
patent document 5: JP-A-2010-195969

### SUMMARY OF THE INVENTION

### Problems to be Solved by the Invention

The present invention has been made in light of the above-mentioned problems, and provides an isobutylene-based block copolymer composition superior in air barrier property, flexibility, toughness, adhesiveness to rubber and mechanical strength at high temperature. Furthermore, the present invention provides an inner liner as an inner liner layer of a pneumatic tire, which does not require a vulcanization step and superior in the balance between air barrier property, flexibility and toughness, and adhesiveness to carcass.

### Means of Solving the Problems

The present inventors have conducted intensive studies and completed the present invention.

That is, the present invention relates to a resin composition containing (A) 100 parts by weight of an isobutylene-based block copolymer having an unsaturated bond and comprising (a) a polymer block mainly comprised of isobutylene and (b) a polymer block mainly comprised of an aromatic vinyl-based compound, and (B) 0.1 - 50 parts by weight of a polythiol compound having two or more thiol groups in one molecule. **According to the invention, (A) the isobutylene-based block copolymer having an unsaturated bond has an alkenyl group at the terminal.**

As a preferable embodiment, it relates to a resin composition wherein (A) the isobutylene-based block copolymer having an unsaturated bond is one wherein β-pinene is copolymerized.

As a preferable embodiment, it relates to a resin composition wherein (A) the isobutylene-based block copolymer having an unsaturated bond is one wherein isoprene is copolymerized.

As a preferable embodiment, it relates to a resin composition wherein the block structure of (A) the isobutylene-based block copolymer having an unsaturated bond is a diblock form of (a) - (b) or a triblock form of (b) - (a) - (b).

As a preferable embodiment, it relates to a resin composition wherein (A) the isobutylene-based block copolymer having an unsaturated bond has a number average molecular weight of 30,000 - 300,000, and a molecular weight distribution (weight average molecular weight/number average molecular weight) of 1.4 or less.

As a preferable embodiment, it relates to a resin composition wherein (A) the isobutylene-based block copolymer having an unsaturated bond contains (a) 60 - 90 wt% of the polymer block mainly comprised of isobutylene and (b) 40 - 10 wt% of the block mainly comprised of an aromatic vinyl-based compound.

As a preferable embodiment, it relates to a resin composition wherein the aromatic vinyl-based compound is styrene.

As a preferable embodiment, it relates to a resin composition which is produced by melt kneading a compound containing (A) the isobutylene-based block copolymer having an unsaturated bond and (B) the polythiol compound having two or more thiol groups in one molecule.

As a preferable embodiment, it relates to a resin composition comprising (C) 1 - 400 parts by weight of a polyamide or ethylene-vinyl alcohol copolymer relative to (A) 100 parts by weight of the isobutylene-based block copolymer having an unsaturated bond.

As a preferable embodiment, it relates to an inner liner for a tire which is made from the aforementioned resin composition.

### Effect of the Invention

The resin composition of the present invention comprised of (A) an isobutylene-based block copolymer having an unsaturated bond and (B) a polythiol compound is particularly superior in adhesiveness and strength at high temperature in addition to air barrier property, flexibility and toughness, which are conventional characteristics of isobutylene-based block copolymers. Particularly, the inner liner for tire of the present invention does not require a vulcanization step, is superior in the balance between air barrier property, flexibility and toughness, and adhesiveness to carcass, and is preferable for easy tire assembling and improvement of gas pressure retention.

### Description of Embodiments

The present invention is a resin composition containing (A) 100 parts by weight of an isobutylene-based block copolymer having an unsaturated bond and comprising (a) a polymer block mainly comprised of isobutylene and (b) a polymer block mainly comprised of an aromatic vinyl-based compound, and (B) 0.1 - 50 parts by weight of a polythiol compound having two or more thiol groups in one molecule.

(A) The isobutylene-based block copolymer having an unsaturated bond, which is used in the present invention, comprises (a) a polymer block mainly comprised of isobutylene and (b) a polymer block mainly comprised of an aromatic vinyl-based compound, and has an alkenyl group at the terminal.
(a) The polymer block mainly comprised of isobutylene is a polymer block constituted by 60 wt% or more, preferably 80 wt% or more, of a unit derived from isobutylene.
   All polymer blocks can use both monomers as well as other cation polymerizable monomer components as copolymerizable components. Examples of such monomer component include monomers such as aliphatic olefins, dienes, vinyl ethers, silanes, vinylcarbazole, acenaphthylene and the like. These can be used alone, or in a combination of two or more kinds thereof.
(b) The polymer block mainly comprised of an aromatic vinyl-based compound is a polymer block constituted by 60 wt% or more, preferably 80 wt% or more, of a unit derived from the aromatic vinyl-based compound.

Examples of the aromatic vinyl-based compound include styrene, o-, m- or p-methylstyrene, α-methylstyrene, β-methylstyrene, 2,6-dimethylstyrene, 2,4-dimethylstyrene, α-methyl-o-methylstyrene, α-methyl-m-methylstyrene, α-methyl-p-methylstyrene, β-methyl-o-methylstyrene, β-methyl-m-methylstyrene, β-methyl-p-methylstyrene, 2,4,6-trimethylstyrene, α-methyl-2,6-dimethylstyrene, α-methyl-2,4-dimethylstyrene, β-methyl-2,6-dimethylstyrene, β-methyl-2,4-dimethylstyrene, o-, m- or p-chlorostyrene, 2,6-dichlorostyrene, 2,4-dichlorostyrene, α-chloro-o-chlorostyrene, α-chloro-m-chlorostyrene, α-chloro-p-chlorostyrene, β-chloro-o-chlorostyrene, β-chloro-m-chlorostyrene, β-chloro-p-chlorostyrene, 2,4,6-trichlorostyrene, α-chloro-2,6-dichlorostyrene, α-chloro-2,4-dichlorostyrene, β-chloro-2,6-dichlorostyrene, β-chloro-2,4-dichlorostyrene, o-, m- or p-t-butylstyrene, o-, m- or p-methoxystyrene, o-, m- or p-chloromethylstyrene, o-, m- or p-bromomethylstyrene, a styrene derivative substituted by a silyl group, indene, vinylnaphthalene and the like. Among these, styrene, α-methylstyrene and a mixture thereof are preferable, and styrene is particularly preferable, from the aspects of industrial availability and glass transition temperature.

The ratio of (a) the polymer block mainly comprised of isobutylene and (b) the block mainly comprised of an aromatic vinyl-based compound is preferably 10 - 90 wt% of (a) the polymer block mainly comprised of isobutylene and 90 - 10 wt% of (b) the block mainly comprised of an aromatic vinyl-based compound, and 60 - 90 wt% of (a) the polymer block mainly comprised of isobutylene and 40 - 10 wt% of (b) the block mainly comprised of an aromatic vinyl-based compound are preferable from the aspects of gas barrier property, flexibility and heat resistance, as well as easy handling in the production and processing.

The unsaturated bond contained in (A) the isobutylene-based block copolymer in the present invention is obtained by copolymerizing the following monomers. Examples thereof include cyclopentadiene, divinylbenzene, isoprene, 1,5-hexadiene, 1,9-decadiene, β-pinene and 1,3-butene. Among these, isoprene is preferable in view of availability. In addition, β-pinene is preferable in view of the easiness of copolymerization with aromatic vinyl. The above-mentioned monomer may be present in either of (a) the block mainly comprised of isobutylene and (b) the block mainly comprised of an aromatic vinyl-based compound. In addition, a block mainly comprised of the above-mentioned monomer may be copolymerized. The content of the above-mentioned monomer is preferably 0.5 - 20 mol% or more, more preferably 1 - 10 mol%. When the content is lower than 0.5 mol%, adhesiveness to a vulcanized rubber may become insufficient, and when it is higher than 20 mol%, gas barrier property tends to decrease.

It is also possible to introduce an unsaturated bond by introducing an alkenyl group into the terminal of the block copolymer. As a method for introducing an alkenyl group into the terminal of a block copolymer, a method for introducing an unsaturated group into a polymer by reacting a polymer having a functional group such as a hydroxyl group and the like with a compound having an unsaturated group, as disclosed in JP-A-3-152164 and JP-A-7-304909, can be mentioned.

The alkenyl group is not particularly limited as long as it is a group containing a carbon-carbon double bond active to a crosslinking reaction with sulfur. Specific examples include aliphatic unsaturated hydrocarbon groups such as a vinyl group, an allyl group, a methylvinyl group, a propenyl group, a butenyl group, a pentenyl group, a hexenyl group and the like, cyclic unsaturated hydrocarbon groups such as a cyclopropenyl group, a cyclobutenyl group, a cyclopentenyl group, a cyclohexenyl group and the like.

In addition, for introducing an unsaturated group into a polymer having a halogen atom, a method for Friedel-Crafts reaction with alkenyl phenyl ether, a method for substitution reaction with allyltrimethylsilane and the like in the presence of Lewis acid, a method for performing Friedel-Crafts reaction with various phenols to introduce a hydroxyl group, and further the aforementioned alkenyl group introduction reaction and the like can be mentioned. Furthermore, it is also possible to introduce an unsaturated group during polymerization of monomers, as disclosed in US Patent No. 4316973, JP-A-S63-105005 and JP-A-4-288309. Of these, introduction of an allyl group into the terminal by a substitution reaction of chlorine with allyltrimethylsilane is preferable from the aspect of reactivity.

The amount of the terminal alkenyl group in the isobutylene-based polymer can be optionally determined depending on the required properties. In view of the adhesiveness, a polymer having at least 0.8 alkenyl group on average in one molecule at the terminal is preferable. When it contains less than 0.8 alkenyl group, improvement effects on the adhesiveness and strength at high temperature may not be obtained sufficiently.

As long as (A) the isobutylene-based block copolymer having an unsaturated bond of the present invention is constituted by (a) a polymer block mainly comprised of isobutylene and (b) a polymer block mainly comprised of an aromatic vinyl-based compound, the structure thereof is not particularly limited and, for example, any of a block copolymer having a structure such as linear, branched, star-shaped structures and the like, a triblock copolymer, a multi block copolymer and the like can be selected. As a preferable structure from the aspects of the balance between physical properties and moldability, a diblock copolymer consisting of (a)-(b) and a triblock copolymer consisting of (b)-(a)-(b) can be recited. These can be used alone or in a combination of two or more kinds thereof to achieve the desired physical properties and moldability.

While the molecular weight of (A) the isobutylene-based block copolymer having an unsaturated bond is not particularly limited, the number average molecular weight by GPC measurement is preferably 30,000 - 300,000, particularly preferably 30,000 - 150,000, from the aspects of flowability, moldability, rubber elasticity and the like. When the number average molecular weight is lower than 30,000, the mechanical physical property tends to be insufficiently expressed. On the other hand, when it exceeds 300,000, the flowability and processability tend to be degraded. Furthermore, the weight average molecular weight/number average molecular weight of the isobutylene-based block copolymer is preferably 1.4 or less from the aspect of processing stability.

While the production method of the isobutylene-based block copolymer is not particularly limited, it is obtained by, for example, polymerizing monomer components in the presence of a compound represented by the following formula (I):

(CR¹R²X)nR³ (I)

wherein X is a substituent selected from a halogen atom, an alkoxy group or an acyloxy group having a carbon number of 1 - 6, R¹ and R² may be the same or different and each is a hydrogen atom or a monovalent hydrocarbon group having a carbon number of 1 - 6, R³ is a monovalent or polyvalent aromatic hydrocarbon group or a monovalent or polyvalent aliphatic hydrocarbon group, and n is a natural number of 1 - 6.

The above-mentioned compound represented by the formula (I) is considered to be an initiator, which produces a carbon cation in the presence of Lewis acid and the like, and becomes a starting point of cation polymerization. Examples of the compound of the formula (I) to be used in the present invention include the following compounds and the like.

(1-chlor-1-methylethyl)benzene[C₆H₅C(CH₃)₂Cl], 1,4-bis(1-chlor-1-methylethyl)benzene[1,4-Cl(CH₃)₂CC₆H₄C(CH₃)₂Cl], 1,3-bis(1-chlor-1-methylethyl)benzene[1,3-Cl(CH₃)₂CC₆H₄C(CH₃)₂Cl], 1,3,5-tris(1-chlor-1-methylethyl)benzene[1,3,5-(ClC(CH₃)₂)₃C₆H₃], 1,3-bis(1-chlor-1-methylethyl)-5-(tert-butyl)benzene[1,3-(C(CH₃)₂Cl)₂-5-(C(CH₃)₃)C₆H₃]

Among these, particularly preferred are bis(1-chlor-1-methylethyl)benzene[C₆H₄(C(CH₃)₂Cl)₂] and tris(1-chlor-1-methylethyl)benzene[(ClC(CH₃)₂)₃C₆H₃]. [Bis(1-chlor-1-methylethyl)benzene is also called bis(α-chloroisopropyl)benzene, bis(2-chloro-2-propyl)benzene or dicumyl chloride, and tris(1-chlor-1-methylethyl)benzene is also called tris(α-chloroisopropyl)benzene, tris(2-chloro-2-propyl)benzene or tricumyl chloride].

When an isobutylene-based block copolymer is produced, a Lewis acid catalyst can also be present. Such Lewis acid may be any as long as it can be used for cation polymerization, and metal halides such as TiCl₄, TiBr₄, BCl₃, BF₃, BF₃·OEt₂, SnCl₄, SbCl₅, SbF₅, WCl₆, TaCl₅, VCl₅, FeCl₃, ZnBr₂, AlCl₃, AlBr₃ and the like; organic metal halides such as Et₂AlCl, EtAlCl₂ and the like can be preferably used. Of these, TiCl₄, BCl₃ and SnCl₄ are preferable when the ability as a catalyst and industrial availability are considered. The amount of the Lewis acid to be used is not particularly limited, and can be determined in view of polymerization property, polymerization concentration and the like of the monomers to be used. The amount can be generally 0.1 - 100 molar equivalents, preferably 1 - 50 molar equivalents, relative to a compound represented by the formula (I).

When producing an isobutylene-based block copolymer, an electron donor component can also be present where necessary. The electron donor component is considered to provide a stabilizing effect on a growth carbon cation during cation polymerization, wherein addition of an electron donor enables production of a polymer having a narrow molecular weight distribution and a controlled structure. Usable electron donor component is not particularly limited, and examples thereof include pyridines, amines, amides, sulfoxides, esters, metal compounds having an oxygen atom bonded to a metal atom and the like.

Polymerization of an isobutylene-based block copolymer can be performed in an organic solvent where necessary. Any organic solvent can be used without particular limitation as long as it does not essentially inhibit the cation polymerization. Specific examples include halogenated hydrocarbons such as methyl chloride, dichloromethane, chloroform, ethyl chloride, dichloroethane, n-propyl chloride, n-butyl chloride, chlorobenzene and the like; alkylbenzenes such as benzene, toluene, xylene, ethylbenzene, propylbenzene, butylbenzene and the like; linear aliphatic hydrocarbons such as ethane, propane, butane, pentane, hexane, heptane, octane, nonane, decane and the like; branched aliphatic hydrocarbons such as 2-methylpropane, 2-methylbutane, 2,3,3-trimethylpentane, 2,2,5-trimethylhexane and the like; cyclic aliphatic hydrocarbons such as cyclohexane, methylcyclohexane, ethylcyclohexane and the like; paraffin oil obtained by hydrogenating and purifying petroleum fraction and the like.

These solvents can be used alone or in a combination of two or more kinds thereof in consideration of the polymerization property of the monomers constituting the isobutylene-based block copolymer and the balance of the solubility and the like of the polymer to be produced.

The amount of the above-mentioned solvent to be used is determined such that the concentration of the polymer is 1 -.50 wt%, preferably 5 - 35 wt%, in consideration of the viscosity of the obtained polymer solution and easy removal of the heat.

In actual polymerization, each component is mixed under cooling, for example, at a temperature of not less than -100°C and less than 0°C. To balance the energy cost and polymerization stability, a particularly preferable temperature range is -30°C to -80°C.

The resin composition of the present invention contains (B) a polythiol compound having two or more thiol groups in one molecule, to impart adhesiveness and improve mechanical strength at high temperature.

While polythiol is not particularly limited as long as it has two or more thiol groups in a molecule, those having the following structures can be recited as examples. Examples thereof include thioglycolates of pentaerythritol, trimethylolpropane, ethylene glycol and the like, mercapto group-substituted alkyl compounds such as mercaptopropionate, mercaptopropylether, dimercaptobutane, trimercaptohexane and the like, and mercapto group-substituted allyl compounds such as dimercaptobenzene and the like. From the aspect of weight loss at the processing temperature, one having a boiling point of 150°C or more, more preferably 200°C or more, most preferably 220°C or more, is preferable.

The amount of (B) a polythiol compound having two or more thiol groups in one molecule to be added is preferably 0.1 - 50 parts by weight, more preferably 1 - 20 parts by weight. When it is lower than 0.1 part by weight, the adhesiveness-improving effect is poor, and when it is 50 parts by weight or more, bleeding out may occur.

The polythiol compound to be used in the present invention reacts with (A) an isobutylene-based block copolymer having an unsaturated bond or vulcanized rubber under heating and light irradiation to produce a sulfur-carbon bond.

The composition of the present invention may further contain (C) polyamide or an ethylene-vinyl alcohol copolymer to improve gas barrier property.

The ethylene-vinyl alcohol copolymer preferably has an ethylene content of 20 - 70 mol%. When the ethylene content is lower than 20 mol%, moisture barrier property, flexibility, flexing resistance as well as heat moldability may become inferior. When it exceeds 70 mol%, the gas barrier property may become insufficient.

Examples of polyamide include nylon-6, nylon-66, nylon-11, nylon-12, nylon-46, nylon-610, nylon-612 and the like.

The amount of (C) polyamide or ethylene-vinyl alcohol copolymer to be blended is preferably 1 - 400 parts by weight, more preferably 10 - 400 parts by weight, relative to 100 parts by weight of (A) an isobutylene-based block copolymer having an unsaturated bond. When the amount of the ethylene-vinyl alcohol copolymer to be blended exceeds 400 parts by weight, flexibility is lost and bending fatigue property over a long term may become inferior.

The composition of the present invention may further contain a crosslinking agent and a crosslinking auxiliary. Examples of the crosslinking agent include elemental sulfur, tetramethylthiuram disulfide, 4,4-dithiobismorpholine, organic peroxide, phenol formaldehyde resin and halomethylphenol. Of these, preferred are elemental sulfur, tetramethylthiuram disulfide and 4,4-dithiobismorpholine. Examples of the crosslinking auxiliary include sulphenamide, benzothiazole, guanidine, dithiocarbamic acid, metal oxides such as zinc oxide and the like, fatty acids such as stearic acid and the like, nitrogen-containing compound, triallylisocyanurate, ethylene glycol dimethacrylate and trimethylolpropane methacrylate. Of these, preferred are sulphenamide, benzothiazole, guanidine, dithiocarbamic acid, metal oxides such as zinc oxide and the like, fatty acids such as stearic acid and the like. Preferable amount of each of the crosslinking agent and crosslinking auxiliary is 0.5 - 5 parts by weight per 100 parts by weight of the isobutylene-based block copolymer.

The composition of the present invention may further contain a tackifier in view of the adhesion to carcass rubber. Examples of the tackifier include natural rosin, terpene, synthetic coumarone indene resin, petroleum resin, alkylphenol resin and the like. The amount of the tackifier to be blended is preferably 1 - 80 parts by weight relative to 100 parts by weight of the isobutylene-based block copolymer.

The composition of the present invention may further contain filler, age resistor, softening agent and processing auxiliary according to the object. Examples of the filler include carbon black, wet silica, dry silica, calcium carbonate, kaolin, talc, clay and the like. Examples of the age resistor include antioxidant, UV absorber and light stabilizer. Examples of the softening agent include paraffin-based oil, naphthene-based oil, aromatic oil, rape seed oil, dioctylphthalate, dioctyladipate and the like. Examples of the processing auxiliary include higher fatty acid, fatty acid ester, metal salt of fatty acid, fatty acid amide, paraffin wax, fatty alcohol, fluorine·silicone-based resin and high molecular weight polyethylene.

To obtain a formulation comprising the composition of the present invention, a well-known method of melt kneading can be applied. For example, an isobutylene-based block copolymer, an ethylene-vinyl alcohol copolymer, and further, other components to be added for achieving predetermined properties are melt kneaded in a heating kneader, for example, single-screw extruder, twin-screw extruder, roll, Banbury mixer, Brabender, kneader, high-shear mixer and the like, whereby a formulation can be produced. The temperature of melt kneading is preferably 100 - 240°C. When the temperature is lower than 100°C, melting of the isobutylene-based block copolymer and ethylene-vinyl alcohol copolymer becomes insufficient, and kneading tends to be nonuniform. When the temperature is higher than 240°C, thermal decomposition and thermal crosslinking of the isobutylene-based block copolymer and ethylene-vinyl alcohol copolymer tend to occur. The obtained composition may be then formed into a film by a general method for forming a film of thermoplastic resin or thermoplastic elastomer, such as extrusion molding and calendar molding.

The composition of the present invention can be preferably used for an inner liner, particularly an inner liner for tire.

The total thickness of the inner liner of the present invention is preferably within the range of 20 µm - 1500 µm. When the thickness is smaller than 20 µm, the flexing resistance of the inner liner decreases to possibly cause fracture and crack due to flexing deformation during tire rolling. On the other hand, when the thickness exceeds 1500 µm, the merit of decreased tire weight becomes smaller.

### Examples

The present invention is explained in more detail in the following by referring to Examples, which are not to be construed as limitative.

Various measurement methods, evaluation methods and Examples are explained before proceeding to the Examples.

### (Tensile strength)

According to JIS K 6251, a sheet was punched out with a dumbbell into a No. 7 test piece and used for the measurement. The tension rate was 100 mm/min.

### (Tensile elongation)

According to JIS K 6251, a sheet was punched out with a dumbbell into a No. 7 test piece and used for the measurement. The atmospheric temperature was 100°C and the tension rate was 100 mm/min.

### (High temperature tensile strength)

According to JIS K 6251, a sheet was punched out with a dumbbell into a No. 7 test piece and used for the measurement. The atmospheric temperature was 100°C and the tension rate was 100 mm/min.

### (High temperature tensile elongation)

According to JIS K 6251, a sheet was punched out with a dumbbell into a No. 7 test piece and used for the measurement. The atmospheric temperature was 100°C and the tension rate was 100 mm/min.

### (Gas barrier property)

As for the gas barrier property, gas permeability was evaluated and the permeability rate of oxygen was evaluated. The permeability rate of oxygen was measured by cutting out a 100 mm×100 mm test piece from the obtained sheet and applying the piece to a differential pressure method at 23°C, 0%RH and 1 atm, according to JIS K 7126.

### (Adhesiveness)

Adhesiveness to isoprene rubber was evaluated. The piece was adhered to a 2 mm-thick unvulcanized isoprene rubber sheet of (Production Example 1), and subjected to heating and pressurizing vulcanization at 200°C, 50 MPa for 10 min. The sheet was cut out into width 2 cm×6 cm, and the stress in 180° peeling test was measured. The test rate was 200 mm/min, and the average value of stress at 3 cm - 5 cm after start of peeling was taken.

(Contents of components described in Examples and the like) **Component (A)-3 is an (A)-component falling within the scope of the corresponding definition in appended claim 1 and Example 3 is an Example according to the invention.**
Component (A)-1 (isobutylene-based block copolymer): styrene-β-pinene-isobutylene-β-pinene-styrene block copolymer, β-pinene content 2.4 mol%, number average molecular weight 102,000 (Production Example 2)
Component (A)-2 (isobutylene-based block copolymer): (styrene/β-pinene)-isobutylene-(styrene/β-pinene) block copolymer, β-pinene content 2.4 mol%, number average molecular weight 107,000 (Production Example 3)
Component (A)-3 (isobutylene-based block copolymer): styrene-isobutylene-styrene triblock copolymer having an allyl group at the terminal. (Production Example 4)
Component (B) (polythiol compound): thioglycolate of pentaerythritol having four thiol groups in a molecule. Karenz MT PE1 (manufactured by Showa Denko K.K.)
Component (C) (ethylene-vinyl alcohol copolymer): ethylene content 44 mol%, ethylene-vinyl alcohol copolymer (trade name "EVAL E105B" manufactured by KURARAY CO., LTD.) Crosslinking agent: sulfur (manufactured by KANTO CHEMICAL CO., INC.)
   Crosslinking auxiliary 1: di-2-benzothiazolyl disulfide
   Crosslinking auxiliary 2: zinc oxide
   Crosslinking auxiliary 3: stearic acid
   Tackifier: alicyclic saturated hydrocarbon resin ("ARKON P-70" manufactured by Arakawa Chemical Industries, Ltd.).
   Age resistor: "AO-50" manufactured by ADEKA CORPORATION
   SIBS: styrene-isobutylene-styrene block copolymer (Production

### Example 5)

### (Production Example 1) Production of isoprene rubber sheet

Isoprene rubber (trade name "IR2200" manufactured by JSR Corporation, 400 g) and carbon black (Asahi Carbon Co., Ltd., Asahi #50, 200 g) were added to a 1 L kneader set to 40°C (manufactured by MORIYAMA COMPANY LTD.), and the mixture was kneaded at 50 rpm for 5 min. Sulfur (6 g), N-tert-butyl-2-benzothiazole sulphenamide (8 g), zinc oxide (8 g) and stearic acid (8 g) were added, and the mixture was kneaded for 2 min, discharged and molded into a 2 mm-thick sheet by a heat press (manufactured by SHINTO Metal Industries Corporation) at 80°C.

### (Production Example 2) [Production of styrene-β-pinene-isobutylene-β-pinene-styrene block copolymer (component (A)-1)]]

The inside of a 2 L separable flask (polymerization vessel) was replaced with nitrogen, and n-hexane (dried with molecular sieves, 31.0 mL) and butyl chloride (dried with molecular sieves, 294.6 mL) were added using an injector. The polymerization vessel was cooled by immersing in a dry ice/methanol bath at -70°C. A Teflon (registered trade mark) feed tube was connected to a pressure-resistant glass liquefaction thief tube equipped with a three-way cock and containing an isobutylene monomer (88.9 mL, 941.6 mmol), and the isobutylene monomer was fed into the polymerization vessel by nitrogen pressure. p-Dicumyl chloride, (0.148 g, 0.6 mmol) and α-picoline (0.07 g, 0.8 mmol) were added. Then, titanium tetrachloride (0.87 mL, 7.9 mmol) was further added to start polymerization. After stirring at the same temperature for 1.5 hr from the start of the polymerization, the polymerization solution (about 1 mL) was extracted as a sample from the polymerization solution. Successively, β-pinene (3.6 g, 26.3 mmol) cooled in advance to -70°C was added into the polymerization vessel. After 45 min from the addition of β-pinene, a styrene monomer (10.4 g, 99.4 mmol) was added into the polymerization vessel. After 45 min from the addition of styrene, methanol (about 40 mL) was added to quench the reaction. The solvent and the like were evaporated from the reaction solution, the residue was dissolved in toluene and washed twice with water. Furthermore, the toluene solution was added to a large amount of methanol to precipitate the polymer, and the obtained polymer was vacuum-dried at 60°C for 24 hr to give the object block copolymer. The molecular weight of the obtained polymer was measured by a gel permeation chromatography (GPC) method. A block copolymer with Mn 102,000 and Mw/Mn 1.25 was obtained.

### (Production Example 3) [Production of (styrene/β-pinene)-isobutylene-(styrene/β-pinene) block copolymer (component (A)-2)]]

The inside of a 2 L separable flask (polymerization vessel) was replaced with nitrogen, and n-hexane (dried with molecular sieves, 31.0 mL) and butyl chloride (dried with molecular sieves, 294.6 mL) were added using an injector. The polymerization vessel was cooled by immersing in a dry ice/methanol bath at -70°C. A Teflon (registered trade mark) feed tube was connected to a pressure-resistant glass liquefaction thief tube equipped with a three-way cock and containing an isobutylene monomer (88.9 mL, 941.6 mmol), and the isobutylene monomer was fed into the polymerization vessel by nitrogen pressure. p-Dicumyl chloride (0.148 g, 0.6 mmol) and α-picoline (0.07 g, 0.8 mmol) were added. Then, titanium tetrachloride (0.87 mL, 7.9 mmol) was further added to start polymerization. After stirring at the same temperature for 1.5 hr from the start of the polymerization, the polymerization solution (about 1 mL) was extracted as a sample from the polymerization solution. Successively, styrene monomer (10.4 g, 99.4 mmol) and β-pinene (3.6 g, 26.3 mmol) cooled in advance to -70°C were stirred well to give a uniform mixture and the mixture was added into the polymerization vessel. After 45 min from the addition of styrene and β-pinene, methanol (about 40 mL) was added to quench the reaction. The solvent and the like were evaporated from the reaction solution, the residue was dissolved in toluene and washed twice with water. Furthermore, the toluene solution was added to a large amount of methanol to precipitate the polymer, and the obtained polymer was vacuum-dried at 60°C for 24 hr to give the object block copolymer. The molecular weight of the obtained polymer was measured by a gel permeation chromatography (GPC) method. A block copolymer with Mn 107,000 and Mw/Mn 1.23 was obtained.

### (Production Example 4) [Production of styrene-isobutylene-styrene triblock copolymer having allyl group at the terminal (component (A)-3)]

The inside of a 2 L separable flask (polymerization vessel) was replaced with nitrogen, and n-hexane (456.4 mL) and butyl chloride (656.3 mL) (each dried with molecular sieves) were added using an injector. The polymerization vessel was cooled by immersing in a dry ice/methanol bath at -70°C. A Teflon (registered trade mark) feed tube was connected to a pressure-resistant glass liquefaction thief tube equipped with a three-way cock and containing an isobutylene monomer (232 mL, 2871 mmol), and the isobutylene monomer was fed into the polymerization vessel by nitrogen pressure. p-Dicumyl chloride (1.089 g, 4.7 mmol) and α-picoline (1.30 g, 14 mmol) were added. Then, titanium tetrachloride (8.67 mL, 79.1 mmol) was further added to start polymerization. After stirring at the same temperature for 2.5 hr from the start of the polymerization, the polymerization solution (about 1 mL) was extracted as a sample from the polymerization solution. Successively, a mixed solution of styrene monomer (77.9 g, 748 mmol), n-hexane (14.1 mL) and butyl chloride (120.4 mL) cooled in advance to -70°C was added into the polymerization vessel. Furthermore, after 2 hr, allyltrimethylsilane (10.74 g, 94 mmol) was added into the polymerization vessel. After 4 hr from the addition of the solution, a large amount of water was added to quench the reaction.

The reaction solution was washed twice with water, the solvent was evaporated, and the obtained polymer was vacuum-dried at 60°C for 24 hr to give the object block copolymer. The molecular weight of the obtained polymer was measured by the gel permeation chromatography (GPC) method. A block copolymer with Mn 63100 was obtained. ¹HNMR has revealed that 1.8 allyl groups were present per 1 mol.

### (Production Example 5) [Production of styrene-isobutylene-styrene block copolymer (SIBS)]]

The inside of a 2 L separable flask (polymerization vessel) was replaced with nitrogen, and n-hexane (dried with molecular sieves, 31.0 mL) and butyl chloride (dried with molecular sieves, 294.6 mL) were added using an injector. The polymerization vessel was cooled by immersing in a dry ice/methanol bath at -70°C. A Teflon (registered trade mark) feed tube was connected to a pressure-resistant glass liquefaction thief tube equipped with a three-way cock and containing an isobutylene monomer (88.9 mL, 941.6 mmol), and the isobutylene monomer was fed into the polymerization vessel by nitrogen pressure. p-Dicumyl chloride (0.148 g, 0.6 mmol) and α-picoline (0.07 g, 0.8 mmol) were added. Then, titanium tetrachloride (0.87 mL, 7.9 mmol) was further added to start polymerization. After stirring at the same temperature for 1.5 hr from the start of the polymerization, the polymerization solution (about 1 mL) was extracted as a sample from the polymerization solution. Successively, styrene monomer (10.4 g, 99.4 mmol) cooled in advance to -70°C was added into the polymerization vessel. After 45 min from the addition of styrene, methanol (about 40 mL) was added to quench the reaction. The solvent and the like were evaporated from the reaction solution, the residue was dissolved in toluene and washed twice with water. Furthermore, the toluene solution was added to a large amount of methanol to precipitate the polymer, and the obtained polymer was vacuum-dried at 60°C for 24 hr to give the object block copolymer. The molecular weight of the obtained polymer was measured by a gel permeation chromatography (GPC) method. A block copolymer with Mn 101,000 and Mw/Mn 1.23 was obtained.

### (Example 1)

Component (A)-1, component (B) and an age resistor were mixed at the proportion shown in Table 1, and the mixture was kneaded by a twin-screw extruder at 170°C to give pellets. The obtained pellets were added into a single-screw extruder equipped with a T die (die lip diameter 2000 µm, width 200 mm) and set to a die temperature of 180°C, and the extruded film was wound up by a roll to give a 1000 µm-thick film. The obtained film was subjected to a tensile test, and measurements of gas barrier property and adhesiveness.

### (Example 2)

In the same manner as in Example 1 except that component (A)-1 was changed to component (A)-2, a film was obtained. The obtained film was subjected to a tensile test, and measurements of gas barrier property and adhesiveness.

### (Example 3)

In the same manner as in Example 1 except that component (A)-1 was changed to component (A)-3 and the amount of the component (B) was changed, a film was obtained. The obtained film was subjected to a tensile test, and measurements of gas barrier property and adhesiveness.

### (Example 4)

Component (A)-1, component (B), component (C) and an age resistor were mixed at the proportion shown in Table 1, and the mixture was kneaded by a twin-screw extruder at 200°C to give pellets. The obtained pellets were added into a single-screw extruder equipped with a T die (die lip diameter 2000 µm, width 200 mm) and set to a die temperature of 220°C, and the extruded film was wound up by a roll to give a 1000 µm-thick film. The obtained film was subjected to a tensile test, and measurements of gas barrier property and adhesiveness.

### (Example 5)

In the same manner as in Example 4 except that the amount of component (C) was changed, a film was obtained. The obtained film was subjected to a tensile test, and measurements of gas barrier property and adhesiveness.

### (Example 6)

In the same manner as in Example 2 except that the amount of component (B) was changed, a film was obtained. The obtained film was subjected to a tensile test, and measurements of gas barrier property and adhesiveness.

### (Example 7)

Component (A)-1, component (B), a tackifier and an age resistor were mixed at the proportion shown in Table 1, and the mixture was kneaded by a twin-screw extruder at 170°C to give pellets. The obtained pellets were added into a single-screw extruder equipped with a T die (die lip diameter 2000 µm, width 200 mm) and set to a die temperature of 170°C, and the extruded film was wound up by a roll to give a 1000 µm-thick film. The obtained film was subjected to a tensile test, and measurements of gas barrier property and adhesiveness.

### (Comparative Example 1)

Component (A)-1 and an age resistor were mixed at the proportion shown in Table 1, and the mixture was kneaded by a twin-screw extruder at 170°C to give pellets. The obtained pellets were added into a single-screw extruder equipped with a T die (die lip diameter 2000 µm, width 200 mm) and set to a die temperature of 180°C, and the extruded film was wound up by a roll to give a 1000 µm-thick film. The obtained film was subjected to a tensile test, and measurements of gas barrier property and adhesiveness.

### (Comparative Example 2)

In the same manner as in Comparative Example 1 except that component (A)-1 was changed to component (A)-2, a film was obtained. The obtained film was subjected to a tensile test, and measurements of gas barrier property and adhesiveness.

### (Comparative Example 3)

In the same manner as in Comparative Example 1 except that component (A)-1 was changed to component (A)-3, a film was obtained. The obtained film was subjected to a tensile test, and measurements of gas barrier property and adhesiveness.

### (Comparative Example 4)

In the same manner as in Comparative Example 1 except that component (A)-1 was changed to SIBS, a film was obtained. The obtained film was subjected to a tensile test, and measurements of gas barrier property and adhesiveness.

### (Comparative Example 5)

Component (A)-3, component (B) and an age resistor were mixed at the proportion shown in Table 1, and the mixture was kneaded by a twin-screw extruder at 170°C to give pellets. The obtained pellets were added into a single-screw extruder equipped with a T die (die lip diameter 2000 µm, width 200 mm) and set to a die temperature of 170°C, and the extruded film was wound up by a roll to give a 1000 µm-thick film. The obtained film was subjected to a tensile test, and measurements of gas barrier property and adhesiveness.

### (Comparative Example 6)

Component (A)-3, a tackifier and an age resistor were mixed at the proportion shown in Table 1, and the mixture was kneaded by a twin-screw extruder at 170°C to give pellets. The obtained pellets were added into a single-screw extruder equipped with a T die (die lip diameter 2000 µm, width 200 mm) and set to a die temperature of 170°C, and the extruded film was wound up by a roll to give a 1000 µm-thick film. The obtained film was subjected to a tensile test, and measurements of gas barrier property and adhesiveness.

**Table 1**

| proportion | | Example 1 | Example 2 | Example 3 | Example 4 | Example 5 | Example 6 | Example 7 |
|---|---|---|---|---|---|---|---|---|
| component (A)-1 | | 100 | | | 100 | 100 | | 100 |
| component (A)-2 | | | 100 | | | | 100 | |
| component (A)-3 | | | | 100 | | | | |
| component (B) | | 2 | 2 | 1 | 2 | 2 | 10 | 2 |
| component (C) | | | | | 25 | 43 | | |
| tackifier | | | | | | | | 50 |
| age resistor | | 0.2 | 0.2 | 0.2 | 0.2 | 0.2 | 0.2 | 0.2 |
| physical property | unit | | | | | | | |
| tensile strength | (MPa) | 20.2 | 18.9 | 15.2 | 14.2 | 11.7 | 22.9 | 15.5 |
| tensile elongation | (%) | 890 | 850 | 700 | 420 | 350 | 750 | 1100 |
| high temperature tensile strength | (MPa) | 8.2 | 9.3 | 6.2 | 8.4 | 7.5 | 10.5 | 6.1 |
| high temperature tensile elongation | (%) | 750 | 650 | 800 | 540 | 450 | 700 | 630 |
| gas barrier property | (×10⁻¹⁶ mol· m/cm2·s·Pa) | 3.7 | 3.5 | 3.4 | 0.3 | 0.06 | 3.4 | 2.8 |
| adhesiveness | (N/20mm) | 75 | 45 | 38 | 61 | 50 | 65 | 84 |

**Table 2**

| proportion | | Comparative Example 1 | Comparative Example 2 | Comparative Example 3 | Comparative Example 4 | Comparative Example 5 | Comparative Example 6 |
|---|---|---|---|---|---|---|---|
| component(A)-1 | | 100 | | | | | |
| component(A)-2 | | | 100 | | | | |
| component (A)-3 | | | | 100 | | 100 | 100 |
| component(B) | | | | | | 100 | |
| tackifier | | | | | | | 50 |
| age resistor | | 0.2 | 0.2 | 0.2 | 0.2 | 0.2 | 0.2 |
| SIBS | | | | | 100 | | |
| physical property | unit | | | | | | |
| tensile strength | (MPa) | 18.2 | 16.5 | 16.2 | 19.5 | 9.5 | 17.5 |
| tensile elongation | (%) | 920 | 780 | 430 | 860 | 340 | 1100 |
| high temperature tensile strength | (MPa) | 2.2 | 2.5 | 3.5 | 2.3 | 4.2 | 1.5 |
| high temperature tensile elongation | (%) | 350 | 420 | 320 | 220 | 250 | 600 |
| gas barrier property | (×10⁻¹⁶ mol· m/cm2·s·Pa) | 3.4 | 3.5 | 0.32 | 3.4 | 6.5 | 2.7 |
| adhesiveness | (N/20mm) | 24 | 16 | 5 | 3 | 10 | 8 |

It is clear that Examples have high adhesion strength to rubber as compared to Comparative Examples 1 - 4 and 6 free of component (B), and are superior in tensile strength at high temperature. Comparative Example 5 containing not less than 50 parts by weight of component (B) has low adhesiveness due to the bleeding of component (B).

### Industrial Applicability

The isobutylene-based block copolymer composition of the present invention is superior in air barrier property, flexibility, toughness, adhesiveness to rubber and mechanical strength at high temperature, and can be preferably used for an inner liner, particularly an inner liner for tire.

## Claims

1. A resin composition containing (A) 100 parts by weight of an isobutylene-based block copolymer having an unsaturated bond and comprising (a) a polymer block mainly comprised of isobutylene and (b) a polymer block mainly comprised of an aromatic vinyl-based compound, and (B) 0.1 - 50 parts by weight of a polythiol compound having two or more thiol groups in one molecule, wherein (A) the isobutylene-based block copolymer having an unsaturated bond has an alkenyl group at the terminal.

2. The resin composition according to claim 1, wherein (A) the isobutylene-based block copolymer having an unsaturated bond is one wherein β-pinene is copolymerized.

3. The resin composition according to claim 1 or 2, wherein (A) the isobutylene-based block copolymer having an unsaturated bond is one wherein isoprene is copolymerized.

4. The resin composition according to any one of claims 1 to 3, wherein the block structure of (A) the isobutylene-based block copolymer having an unsaturated bond is a diblock form of (a)-(b) or a triblock form of (b)-(a)-(b).

5. The resin composition according to any one of claims 1 to 4, wherein (A) the isobutylene-based block copolymer having an unsaturated bond has a number average molecular weight of 30,000 - 300,000, and a molecular weight distribution (weight average molecular weight/number average molecular weight) of 1.4 or less.

6. The resin composition according to any one of claims 1 to 5, wherein (A) the isobutylene-based block copolymer having an unsaturated bond contains (a) 60 - 90 wt% of the polymer block mainly comprised of isobutylene and (b) 40 - 10 wt% of the block mainly comprised of an aromatic vinyl-based compound.

7. The resin composition according to any one of claims 1 to 6, wherein the aromatic vinyl-based compound is styrene.

8. The resin composition according to any one of claims 1 to 7, which is produced by melt kneading a compound containing (A) the isobutylene-based block copolymer having an unsaturated bond and (B) the polythiol compound having two or more thiol groups in one molecule.

9. The resin composition according to any one of claims 1 to 8, comprising (C) 1 - 400 parts by weight of a polyamide or ethylene-vinyl alcohol copolymer relative to (A) 100 parts by weight of the isobutylene-based block copolymer having an unsaturated bond.

10. An inner liner for a tire which is made from the resin composition according to any one of claims 1 to 9.

## Patentansprüche

1. Harzzusammensetzung, enthaltend (A) 100 Gewichtsteile eines Blockcopolymers auf Isobutylenbasis, das eine ungesättigte Bindung aufweist und (a) einen Polymerblock, der hauptsächlich aus Isobutylen besteht, und (b) einen Polymerblock, der hauptsächlich aus einer aromatischen Verbindung auf Vinylbasis besteht, umfasst, und (B) 0,1 bis 50 Gewichtsteile einer Polythiolverbindung, die zwei oder mehr Thiolgruppen in einem Molekül aufweist, wobei (A) das Blockcopolymer auf Isobutylenbasis, das eine ungesättigte Bindung aufweist, eine Alkenylgruppe am Kettenende aufweist.

2. Harzzusammensetzung gemäß Anspruch 1, wobei (A) das Blockcopolymer auf Isobutylenbasis, das eine ungesättigte Bindung aufweist, eines ist, bei dem β-Pinen copolymerisiert ist.

3. Harzzusammensetzung gemäß Anspruch 1 oder 2, wobei (A) das Blockcopolymer auf Isobutylenbasis, das eine ungesättigte Bindung aufweist, eines ist, bei dem Isopren copolymerisiert ist.

4. Harzzusammensetzung gemäß einem der Ansprüche 1 bis 3, wobei die Blockstruktur von (A) dem Blockcopolymer auf Isobutylenbasis, das eine ungesättigte Bindung aufweist, die Diblockform (a)-(b) oder die Triblockform (b)-(a)-(b) ist.

5. Harzzusammensetzung gemäß einem der Ansprüche 1 bis 4, wobei (A) das Blockcopolymer auf Isobutylenbasis, das eine ungesättigte Bindung aufweist, ein Zahlenmittel des Molekulargewichts von 30 000 bis 300 000 und eine Molekulargewichtsverteilung (Gewichtsmittel des Molekulargewichts/Zahlenmittel des Molekulargewichts) von 1,4 oder weniger aufweist.

6. Harzzusammensetzung gemäß einem der Ansprüche 1 bis 5, wobei (A) das Blockcopolymer auf Isobutylenbasis, das eine ungesättigte Bindung aufweist, 60 bis 90 Gew.-% des Polymerblocks, der hauptsächlich aus Isobutylen besteht, und (b) 40 bis 10 Gew.-% des Blocks, der hauptsächlich aus einer aromatischen Verbindung auf Vinylbasis besteht, enthält.

7. Harzzusammensetzung gemäß einem der Ansprüche 1 bis 6, wobei es sich bei der aromatischen Verbindung auf Vinylbasis um Styrol handelt.

8. Harzzusammensetzung gemäß einem der Ansprüche 1 bis 7, die dadurch hergestellt wird, dass man ein Compound, das (A) das Blockcopolymer auf Isobutylenbasis, das eine ungesättigte Bindung aufweist, und (B) die Polythiolverbindung, die zwei oder mehr Thiolgruppen in einem Molekül aufweist, in der Schmelze knetet.

9. Harzzusammensetzung gemäß einem der Ansprüche 1 bis 8, umfassend (C) 1 bis 400 Gewichtsteile eines Polyamids oder Ethylen-Vinylalkohol-Copolymers, bezogen auf (A) 100 Gewichtsteile des Blockcopolymers auf Isobutylenbasis, das eine ungesättigte Bindung aufweist.

10. Innerliner für einen Reifen, der aus der Harzzusammensetzung gemäß einem der Ansprüche 1 bis 9 besteht.

## Revendications

1. Composition de résine contenant (A) 100 parties en masse d'un copolymère séquencé à base d'isobutylène ayant une liaison insaturée et comprenant (a) une séquence polymère principalement constituée d'isobutylène et (b) une séquence polymère principalement constituée d'un composé à base de vinyle aromatique, et (B) 0,1-50 parties en masse d'un composé de polythiol ayant deux groupes thiol ou plus dans une molécule, dans laquelle (A) le copolymère séquencé à base d'isobutylène ayant une liaison insaturée présente un groupe alcényle à la terminaison.

2. Composition de résine selon la revendication 1, dans laquelle (A) le copolymère séquencé à base d'isobutylène ayant une liaison insaturée est un dans lequel du β-pinène est copolymérisé.

3. Composition de résine selon la revendication 1 ou 2, dans laquelle (A) le copolymère séquencé à base d'isobutylène ayant une liaison insaturée est un dans lequel de l'isoprène est copolymérisé.

4. Composition de résine selon l'une quelconque des revendications 1 à 3, dans laquelle la structure séquencée de (A) le copolymère séquencé à base d'isobutylène ayant une liaison insaturée est une forme diséquencée de (a)-(b) ou une forme triséquencée de (b)-(a)-(b).

5. Composition de résine selon l'une quelconque des revendications 1 à 4, dans laquelle (A) le copolymère séquencé à base d'isobutylène ayant une liaison insaturée présente une masse moléculaire moyenne en nombre de 30 000 - 300 000, et une distribution de masse moléculaire (masse molécule moyenne en masse/masse moléculaire moyenne en nombre) de 1,4 ou inférieure.

6. Composition de résine selon l'une quelconque des revendications 1 à 5, dans laquelle (A) le copolymère séquencé à base d'isobutylène ayant une liaison insaturée contient (a) 60-90 % en masse de la séquence polymère principalement constituée d'isobutylène et (b) 40-10 % en masse de la séquence principalement constituée d'un composé à base de vinyle aromatique.

7. Composition de résine selon l'une quelconque des revendications 1 à 6, dans laquelle le composé à base de vinyle aromatique est le styrène.

8. Composition de résine selon l'une quelconque des revendications 1 à 7, laquelle est produite par malaxage à l'état de fusion d'un composé contenant (A) le copolymère séquencé à base d'isobutylène ayant une liaison insaturée et (B) le composé de polythiol ayant deux groupes thiol ou plus dans une molécule.

9. Composition de résine selon l'une quelconque des revendications 1 à 8, comprenant (C) 1-400 parties en masse d'un polyamide ou d'un copolymère d'éthylène-alcool vinylique par rapport à (A) 100 parties en masse du copolymère séquencé à base d'isobutylène ayant une liaison insaturée.

10. Doublure interne pour un pneu qui est constituée de la composition de résine selon l'une quelconque des revendications 1 à 9.
